# EUROPÄISCHE PATENTSCHRIFT

(11) **EP 1 479 564 B1**
(45) Veröffentlichungstag und Bekanntmachung des Hinweises auf die Patenterteilung: **30.12.2009**
(21) Anmeldenummer: 04010039.8
(22) Anmeldetag: 28.04.2004
(51) Int. Cl.: B60R 5/04

(54) **Schutzvorrichtung für einen Innenraum eines Kraftfahrzeuges**
Protection device for the interior of a vehicle
dispositif de protection pour intérieur véhicule

(30) Priorität: 21.05.2003 DE 10324289
(43) Veröffentlichungstag der Anmeldung: 24.11.2004
(73) Patentinhaber: BOS GmbH & Co. KG, 73760 Ostfildern (DE)
(72) Erfinder: Sparrer, Henning, 73235 Weilheim (DE); Seeg, Thomas, 73760 Ostfildern (DE); Lechner, Matthias, Dr., 80935 München (DE); Stöckl, Siegfried, 84076 Pfeffenhausen (DE)
(74) Vertreter: Patentanwälte Ruff, Wilhelm, Beier, Dauster & Partner

(56) Entgegenhaltungen:
- EP-A- 0 976 615
- DE-A- 19 906 648
- FR-A- 2 755 655
- US-A- 4 252 362
- US-A1- 2002 113 450
- US-B1- 6 416 103

## Beschreibung

Die Erfindung betrifft eine Schutzvorrichtung für einen Innenraum eines Kraftfahrzeugs mit einem flexiblen Flächengebilde, das zwischen einer kompakt abgelegten Ruheposition und wenigstens einer ausgezogenen Schutzposition beweglich gelagert ist.

Eine derartige Schutzvorrichtung ist in Form einer Laderaumabdeckung aus der DE 199 44 948 C1 bekannt. Die bekannte Laderaumabdeckung weist ein flexibles Flächengebilde auf, das in einem Kassettengehäuse auf einer Wickelwelle auf- und abrollbar gehalten ist. Das Kassettengehäuse ist im Bereich einer Rükkenlehnenanordnung einer Fondsitzbank positioniert. In einem in Ausziehrichtung vorderen Stirnendbereich ist eine sich über die Breite des Flächengebildes erstreckende, formstabile Auszugleiste vorgesehen, die mit ihren seitlichen Enden über die Seitenränder des Flächengebildes hinaus ragt. Die seitlichen Enden der Auszugleiste sind in seitlichen Führungsschienen des Laderaumes angeordnet, in denen längsverschiebbare Mitnehmer vorgesehen sind, die die seitlichen Enden der Auszugleiste mit begrenzter Kraft längs der Führungsschlenen mitnehmen. Die Mitnehmer sind durch eine elektrische Antriebsvorrichtung angetrieben, wobei die gegenüberliegenden Mitnehmer vorzugsweise miteinander synchronisiert sind, um eine parallele Auszieh-oder Einschubbewegung der Auszugleiste und damit des Flächengebildes zu erzielen. Das Flächengebilde ist daher zwischen einer im Kassettengehäuse integrierten, kompakt aufgewickelten Ruheposition und einer einen Laderaum des Kraftfahrzeugs etwa horizontal überdeckenden Schutzposition beweglich gelagert.

Aufgabe der Erfindung ist es, eine Schutzvorrichtung der eingangs genannten Art zu schaffen, mittels der mit einfachen Mitteln unterschiedliche Schutzzustände für den Innenraum des Kraftfahrzeugs realisierbar sind.

Diese Aufgabe wird durch die Merkmale des Patentanspruchs 1 gelöst. Durch die erfindungsgemäße Lösung dient das Flächengebilde sowohl als etwa horizontale Laderaumabdeckung als auch als etwa vertikal ausgerichtete Trennvorrichtung. In der etwa horizontalen Abdeckungsfunktion für den Laderaum ist das Flächengebilde vorzugsweise etwa auf Höhe oder knapp unterhalb einer Fahrzeugbordkante ausgezogen und überdeckt den Laderaum. In der Funktion als Trennvorrichtung ist das Flächengebilde etwa vertikal bis etwa zu einem Dachhimmel ausgezogen, wodurch ein Fahrgastraum von einem Laderaum innerhalb des innenraumes abgetrennt wird. In der Laderaumabdeckungsfunktion des Flächengebildes wird in erster Linie ein Sichtschutz geschaffen, um von außerhalb des Fahrzeugs einen Einblick ins innere des Laderaumes zu verhindern. Dadurch kann man von außen nicht erkennen, was sich im Laderaum unterhalb des Flächengebildes befindet. Das Flächengebilde ist in dieser Laderaumabdeckungsfunktion vorzugsweise blickdicht gestaltet. In der vertikal aufgespannten Trennfunktion soll das Flächengebilde verhindern, dass insbesondere bei einer starken Fahrzeugverzögerung Gegenstände aus dem Laderaum in den Fahrgastraum geschleudert werden. Das Flächengebilde weist somit eine Rückhaltefunktion für Laderaumgut auf. In der etwa vertikal ausgezogenen Schutzposition ist das Flächengebilde vorzugsweise derart lichtdurchlässig, dass ein Fahrer bei einem Blick in den Rückspiegel durch das aufgespannte Flächengebilde hindurch das Geschehen hinter dem Fahrzeug, insbesondere den hinter ihm befindlichen Straßenverkehr, beobachten kann. Das Flächengebilde kann hierfür vorzugsweise aus einer Web-oder Maschenware bestehen, die derart netz- oder gitterartig gestaltet ist, das bei einem Blick auf das augespannte Flächengebilde in einem spitzen Winkel das Flächengebilde weitgehend undurchsichtig wirkt, wohingegen bei einem Durchblick in einem rechten Winkel zu der aufgespannten Fläche des Flächengebildes eine Durchsicht ermöglicht ist. In der horizontalen Laderaumabdeckungsfunktion kann somit ein Blick von außerhalb des Fahrzeugs ins Fahrzeuginnere, der zwangsläufig in einem spitzen Winkel auf das Flächegebilde auftrifft, keine Durchsicht durch das Flächengebilde ermöglichen. Der gewünschte Sichtschutz in der Laderaumabdeckungsfunktion ist so gewährleistet.

Erfindungsgemaß weisen die Führungsmittel eine Linearführungsanordnung auf, die auf gegenüberliegenden Fahrzeugseiten zueinander parallele, geradlinig und/oder gekrümmt verlaufende Führungsprofilierungen aufweist. Vorzugsweise verlaufen die gegenüberliegenden Führungsprofilierungen längs entsprechender Fahrzeugsäulen der Karosserietragstruktur zu einem Dachrahmenbereich und weiter längs des jeweiligen Dachrahmenbereiches in Fahrzeuglängsrichtung. Vorzugsweise sind die Führungsprofillerungen mit der Karosserietragstruktur verankert und an eine Innenraumverkleidung angepasst bzw. In dieser integriert. Bevorzugt sind die Führungsprofilierungen aus Kulissenführungen gestaltet, die durch an die entsprechende Kontur zwischen der Fahrzeugbordkante und einem Dachbereich angepasste Führungsschienen gebildet sind. Als Führungsprofillerungen sind sowohl Hohlkörperprofile als auch erhabene Profile vorgesehen, so dass die Lagerelemente entweder schlittenartig auf erhabenen Profilen in Form von Profilschienen oder ähnlichem gelagert sind, oder aber in Profilaufnahmen, die vorzugsweise als Nuten gestaltet sind, eingesetzt und in diesen längsverschiebbar sind.

Erfindungsgemäß ist ein in Auszugrichtung vorderer Stirnendbereich des Flächengebildes quer zur Auszugrichtung formstabil gestaltet und weist seitliche Lagerelemente auf, die mit den Führungsprofilierungen in Verbindung stehen. Die Lagerelemente sind an oder in den Führungsprofillerungen vorzugsweise gleit- oder rollbeweglich längs verlagerbar. Die Lagerelemente und Führungsprofilierungen sind wenigstens in Endbereichen der Führungsprofilierungen, die die Schutzpositionen des Flächengebildes definieren, derart formschlüssig miteinander verbunden, dass durch eine starke Fahrzeugverzögerung verursachte Belastungen auf das Flächengebilde aufgenommen werden, ohne dass die Lageelemente sich von den Führungsprofilierungen trennen. Die Lagerelemente sind somit ausreißsicher in oder an den Führungsprofilierungen gehalten. Durch diese Lösung ist gewährleistet, dass eine Crashsicherheit für das Flächengebilde und damit für die gesamte Schutzvorrichtung erzielbar ist.

In Ausgestaltung der Erfindung ist den Führungsmitteln im Bereich wenigstens einer Schutzposition eine Trenneinrichtung zugeordnet, die ein gesteuertes Lösen des Stirnendbereiches von den Führungsmitteln ermöglicht. Eine entsprechende Steuerung kann manuell durch Ergreifen des Stirnendbereiches oder auch automatisch durch eine geeignete Steuereinrichtung erfolgen. Die Trenneinrichtung kann in unterschiedlicher Art und Weise ausgeführt sein. Es ist Insbesondere möglich, dass bei Gestaltung der Führungsmittel als Führungsprofillerungen wenigstens eine Führungsprofillerung an wenigstens einem Endbereich derart offen gestaltet ist, dass ein manuelles Lösen des Stirnendbereiches des Flächengebildes, d.h. ein Lösen der Lagerelemente, von derentsprechenden Führungsprofillerung ermöglicht ist. Alternativ ist es auch möglich, Trenneinrichtungen vorzusehen, die nach Art von lösbaren Verschlüssen ausgeführt sind. Ein Lösen der entsprechenden Verschlüsse führt somit zwangsläufig auch zu einem Lösen des Flächengebildes von den Führungsmittel. Dies ist insbesondere vorteilhaft, falls das Flächengebilde nicht benötigt wird und direkt aus einer vertikalen Schutzposition in die kompakte Ruheposition überführt werden soll, ohne den Umweg über die Längsverlagerung längs der Führungsmittel zu gehen.

In weiterer Ausgestaltung der Erfindung ist eine Antriebsvorrichtung vorgesehen, die in wenigstens einer Richtung eine Verlagerung des Stirnendbereiches längs der Führungsprofilierungen erzielt. Vorzugsweise ist wenigstens in Auszugrichtung ein entsprechender Antrieb vorgesehen, der mechanisch, insbesondere in Form eines Federspeichers, elektrisch, pneumatisch, hydraulisch oder in anderer Art und Weise ausgeführt sein kann. Besonders bevorzugt ist als Antriebsvorrichtung ein Linearstellantrieb den Führungsprofilierungen zugeordnet, der auf die Stirnendbereiche des Flächengebildes in wenigstens einer Richtung der Längserstreckung der Führungsprofilierungen einwirkt.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt eine erste Ausführungsform einer erfindungsgemäßen Schutzvorrichtung, bei der ein Flächengebilde sich in seiner kompakt abgelegten Ruheposition befindet,
- Fig. 2: die Schutzvorrichtung nach Fig. 1, bei der das Flächengebilde sich in einer ersten Schutzposition befindet,
- Fig. 3: in vergrößerter Darstellung einen Ausschnitt III einer Führung des Flächengebildes nach Fig. 2,
- Fig. 4: die Schutzvorrichtung nach Fig. 2, bei der das Flächengebilde sich in einer etwas vertikal aufgespannten Schutzposition befindet,
- Fig. 5: in vergrößerter Darstellung einen Ausschnitt einer seitlichen Führung für das Flächengebilde,
- Fig. 6: schematisch eine weitere Ausführungsform einer erfindungsgemäßen Schutzvorrichtung mit modifizierten Führungsmitteln,
- Fig. 7: eine weitere Ausführungsform einer erfindungsgemäßen Schutzvorrichtung für einen mit einem Fliessheckversehenen Personenkraftwagen,
- Fig. 8: die Darstellung nach Fig. 7, bei der das Flächengebilde sich in einer etwa vertikal aufgespannten Schutzposition befindet,
- Fig. 9: eine weitere Ausführungsform einer Schutzvorrichtung in perspektivischer Darstellung,
- Fig. 10: die Schutzvorrichtung nach Fig. 9 in einer schematischen Seitenansicht,
- Fig. 11: eine weitere Ausführungsform einer Schutzvorrichtung ähnlich Fig. 9 und
- Fig. 12: die Schutzvorrichtung nach Fig. 11 in einer schematischen Seitenansicht.

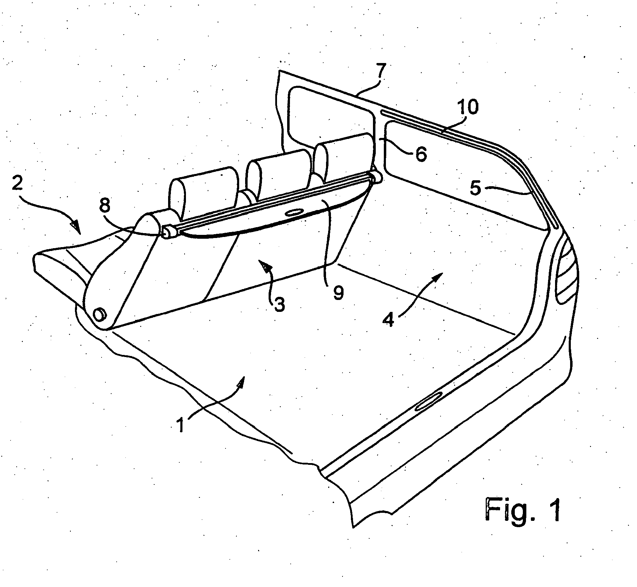

Ein Kraftfahrzeug ist gemäß den Fig. 1 bis 4 als Kombi-Personenkraftwagen ausgeführt, der in einem Fahrzeuginnenraum zum einen einen Fahrgastraum 2 und zum anderen einen Laderaum 1 umfasst. Der Laderaum 1 ist in einem Heckbereich des Kraftfahrzeugs angeordnet und von außen her über eine nicht näher dargestellte Heckklappe zugänglich. Der Laderaum 1 wird in Fahrzeuglängsrichtung nach vorne durch eine Rückenlehnenanordnung 3 einer Fondsitzbank begrenzt. Auf gegenüberliegenden Fahrzeugseiten ist jeweils eine Seitenwand 4 vorgesehen, die den Laderaum 1 jeweils seitlich begrenzt. Jede Seitenwand 4 ist bis etwa auf Höhe einer Fahrzeugbordkante, d.h. bis etwa auf Höhe von Unterkanten von Fensterausschnitten, von einem Laderaumboden ausgehend geschlossen ausgeführt und vorzugsweise mit entsprechenden Innenverkleidungsteilen versehen. Oberhalb der Fahrzeugbordkante sind die Fensterausschnitte durch entsprechende Karosseriesäulenabschnitte 5, 6 flankiert, die in einen Dachrahmenbereich 7 übergehen. Die Tragsäulenabschnitte 5, 6 und der Dachrahmenbereich 7 sind Teile einer nicht näher dargestellten Karosserietragstruktur, die im Bereich des Fahrzeuginnenraumes durch entsprechende, nicht näher bezeichnete Verkleidungen abgedeckt sind.

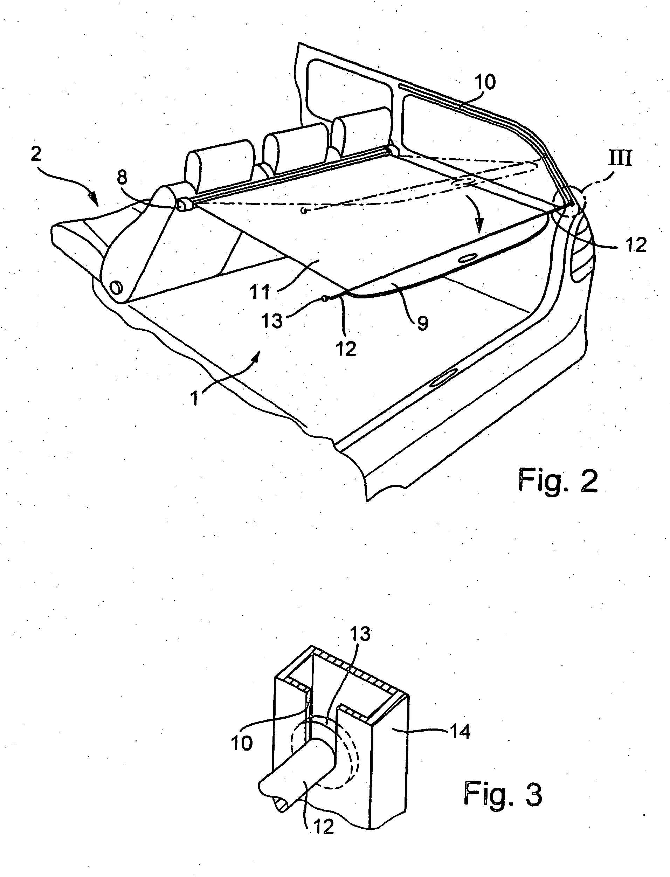

Im Bereich einer Rückseite der Rückenlehnenanordnung 3 ist knapp unterhalb der Fahrzeugbordkante ein Kassettengehäuse 8 einer Schutzvorrichtung für den Laderaum 1 angeordnet, das entweder direkt an der Rückenlehnenanordnung oder an den Seitenwänden 4 vorzugsweise lösbar befestigt ist. In dem Kassettengehäuse 8 ist in grundsätzlich bekannter Weise eine Wikkelwelle drehbar gelagert, auf der ein auf- und abrollbares flexibles Flächengebilde 11 (Fig. 2) gehalten ist. Das Flächengebilde 11 ist durch einen nicht näher bezeichneten Schlitz in dem Kassettengehäuse 8 aus diesem herausgeführt. Das Kassettengehäuse erstreckt sich über nahezu die gesamte Breite des Laderaumes 1. In entsprechender Weise erstreckt sich das Flächengebilde 11 ebenfalls nahezu über die gesamte Breite des Laderaumes 1. Das Flächengebilde 11 ist in seiner kompakt abgelegten Ruheposition vollständig auf die Wikkelwelle aufgerollt. In dieser Ruheposition ragt lediglich ein Stirnendbereich 9 des Flächengebildes 11 aus dem Schlitz des Kassettengehäuses 8 heraus. Der Stimendbereich 9 erstreckt sich über die gesamte Breite des Flächengebildes 11 und ist formstabil ausgeführt. Der Stirnendbereich 9 weist eine sich quer über die gesamte Breite des Flächengebildes 11 erstreckende, formstabile Auszugleiste 12 auf, die mit ihren gegenüberliegenden Stirnenden jeweils seitlich über den jeweiligen Seitenrand des Flächengebildes 11 hinausragt. Jedes Stirnende ist mit einem nachfolgend näher beschriebenen Lagerelement 13 versehen.

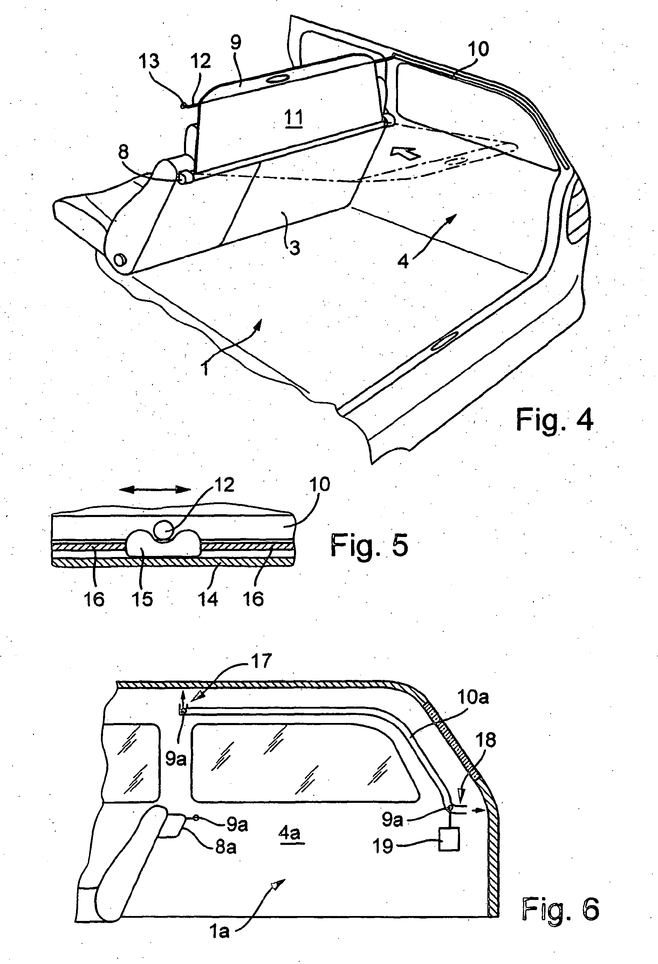

Das Flächengebilde 11 ist sowohl in eine in Fig. 2 dargestellte, etwa horizontale Schutzposition als auch in eine in Fig. 4 dargestellte, etwa vertikal aufgespannte Schutzposition ausziehbar. In grundsätzlich bekannter Weise ist die Rollowelle durch eine in dem Kassettengehäuse 8 integrierte Rückholanordnung, vorzugsweise eine Rückholfeder, in Aufwickelrichtung des Flächengebildes 11 drehbelastet, so dass eine entsprechende Rückholkraft der Rückholanordnung das Flächengebilde 11 in beiden Schutzpositionen jeweils gestrafft hält. Zudem ist in dem Kassettengehäuse wenigstens für die etwa vertikal aufgespannte Schutzposition des Flächengebildes 11 eine Fixiereinrichtung (nicht dargestellt) vorgesehen, die bei bekannten Trennnetzen bereits eingesetzt wird. Diese Blockiereinrichtung sichert das Flächengebilde bei einer starken Fahrzeugverzögerung bzw. beim Eintauchen von schweren Gegenständen in das Flächengebilde gegen einen Ausziehvorgang. Dabei wird insbesondere ein schlag- oder ruckartiges Ausziehen des Flächengebildes verhindert. Vorzugsweise ist diese Blockiereinrichtung lediglich in vertikaler, nicht jedoch in etwa horizontaler Schutzposition des Flächengebildes 11 wirksam.

Das Flächengebilde 11 besteht aus einem textilen Web- oder Maschenwarenmaterial, das derart netz- oder gitterartig gestaltet ist, dass das Flächengebilde 11 bei einem schrägen Blickwinkel, insbesondere einem spitzen Blickwinkel zwischen 0° und 60°, blickdicht ist. Bei einem Blick durch das aufgespannte Flächengebilde 11 hindurch in einem rechten Winkel, d.h. in einem Winkel von etwa 90°, ist das Flächengebilde 11 lichtdurchlässig. Dadurch erlaubt das Flächengebilde 11 in seiner etwa vertikalen aufgespannten Schutzposition nach Fig. 4 einen Durchblick für einen Fahrer des Kraftfahrzeugs, falls dieser durch einen Rückspiegel im Fahrzeuginnenraum beispielsweise den rückwärtigen Verkehr beobachten möchte.

Das Flächengebilde 11 ist mit seinem Stirnendbereich 9 und insbesondere mit der Auszugleiste 12 und den Lagerelementen 13 in seitlichen Führungsprofilierungen 10 gehalten. Die Führungsprofilierungen 10 sind als Führungsschienen 14 in Form von Hohlprofilen gestaltet, die jeweils eine zum Fahrzeuginnenraum offene Kulissenführung 10 bilden. Zur Führung des Stirnendbereiches 9 und der Auszugleiste 12 sind auf gegenüberliegenden Fahrzeugseiten zwei zueinander parallel verlaufende Führungsschienen 14 vorgesehen, die mit der Karosserietragstruktur fest verbunden sind. Jede Führungsschiene 14 weist ausgehend von einem Heck des Laderaumes 1 einen ersten, schräg ansteigenden Abschnitt auf, der längs des heckseitigen Tragsäulenabschnittes 5 verläuft. An einem Übergang des heckseitigen Tragsäulenabschnittes 5 in dem Dachrahmenabschnitt 7 ist jede Führungsschiene gekrümmt gestaltet, um dem karosserieseitigen Übergang zu folgen. Ein weiterer Abschnitt jeder Führungsschiene 14 erstreckt sich längs des jeweiligen Dachrahmenabschnittes 7 bis etwa auf Höhe eines zur C-Säule gehörenden Tragsäulenabschnittes 6, der etwa auf Höhe der Rückenlehnenanordnung 3 der Fondsitzbank positioniert ist. Die Auszugleiste 12 ist in ihrer in Fahrzeugquerrichtung ausgerichteten Halteposition längs der Kulissenführung beider Führungsschienen 14 verlagerbar (siehe auch strichpunktierte Darstellung in den Fig. 2 und 4). Die etwa horizontale Schutzposition des Flächengebildes 11 (Fig. 2) und die etwa vertikale SchutzPosition des Flächengebildes 11 (Fig. 4) sind durch gegenüberliegende Endpositionen der Führungsschienen 14 und der Kulissenführungen 10 definiert und begrenzt. Die Auszugleiste 12 kann in den Führungsschienen manuell zwischen den beiden Schutzpositionen verschoben werden.

Alternativ ist es gemäß der Darstellung nach Fig. 5 vorgesehen, die Auszugleiste 12 und damit das Flächengebilde 11 durch eine Antriebsvorrichtung in den Führungsschienen zu verlagern. Die Antriebsvorrichtung ist gleich oder ähnlich gestaltet wie die aus der DE 199 44 948 C1 bekannte Antriebsvorrichtung, so dass zur ergänzenden Offenbarung auf diesen Stand der Technik Bezug genommen wird. Eine solche Antriebsvorrichtung weist vorzugsweise einen Antriebsmotor auf, wie er anhand der Fig. 6 mit dem Bezugszeichen 19 versehen ist. Die gegenüberliegenden Stirnenden der Auszugleiste 12 sind in jeder Führungsschiene an einem längsbeweglichen Mitnehmer 15 gehalten, der durch Zug- und/oder Druckmittel 16 mittels einer Betätigung des Antriebsmotors längs der Kulissenführung verfahrbar ist. Dadurch ist eine automatische und zwangsgesteuerte Verlagerung des Flächengebildes 11 in die jeweils gewünschte Schutzposition möglich. Die Mitnehmer 15 können so gestaltet sein, dass die Auszugleiste 12 kraftabhängig lösbar ist. Alternativ können die Mitnehmer die Auszugleiste kraftunbegrenzt sichern und mitführen, so dass kein kraftabhängiges Lösen der Auszugleiste erreichbar ist. Ein Lösen kann nur definiert gesteuert durch eine Trennvorrichtung erfolgen.

Der Stirnendbereich 9 ist als formstabiles Konturteil gebildet, das so gestaltet ist, dass es zum einen einer Kontur einer Innenseite des Heckklappe folgt, um hier einen bündigen Abschluss zu erzielen. Zum anderen ist das Konturteil auch so geformt, dass es in der vertikalen Schutzposition des Flächengebildes über seine gesamte Länge im wesentlichen bündig mit einem nicht näher dargestellten Dachhimmel abschließt. Hierdurch wird in beiden Schutzpositionen ein blickdichter Abschluss mit dem entsprechenden Wandungsabschnitt des Fahrzeuginnenraumes, d.h. insbesondere der Innenverkleidung der Heckklappe für den Dachhimmel, erzielt.

Die Lagerelemente 13 im Bereich gegenüberliegender Stirnenden der Auszugleiste 12 sind derart block- oder scheibenartig ausgeführt, dass sie die Funktion von Kulissensteinen Innerhalb der Kulissenführungen aufweisen, Sie bilden zudem einen formschlüssigen Rückhalt in den Führungsschienen 14, wodurch ein Herausgleiten der Auszugleiste 12 aus den Kulissenführungen nach innen, d.h. zur Fahrzeugmitte hin, vermieden wird.

Die Ausführungsform nach Fig. 6 entspricht im wesentlichen dem zuvor beschriebenen Ausführungsbeispiel. Wesentlicher Unterschied ist es, dass der Stirnendbereich 9a des Flächengebildes sowohl in der etwa horizontalen Schutzposition als auch in der etwa vertikalen Schutzposition von den Führungsschienen 10a gelöst werden kann. Hierzu ist an gegenüberliegenden Stirnenden jeder Führungsschiene eine Trennvorrichtung, vorliegend in Form jeweils eines offenen Bereiches 17, 18, zugeordnet. Die Führungsschienen 10a sind somit an beiden Endbereichen in jeweiliger Ausziehrichtung des Flächengebildes, d.h. entgegen der durch die Rückholanordnung wirkenden Rückholkraft, offen gestaltet, so dass der Stirnendbereich 9a aus den Führungsschienen 10a ausgehängt werden kann. Die Öffnung der offenen Bereiche 17 und 18 vom Kassetengehäuse 8a weg in jeweils entgegengesetzter Richtung gewährleistet zum einen eine sichere Positionierung in der jeweiligen Schutzposition. Zum anderen ist dennoch durch ein Ausziehen nach oben (am offenen Bereich 17) oder durch ein Ausziehen nach hinten (am offenen Bereich 18) ein Trennen des Stirnendbereiches 9a und damit des Flächengebildes 11 von den Führungsschienen 10a und damit von den Führungsmitteln erzielbar. Das Flächengebilde ist somit einschließlich seines Stirnendbereiches 9a in die kompakte Ruheposition ablegbar, in der das Flächengebilde auf der Wikkelwelle aufgewickelt und im Kassettengehäuse 8a integriert ist. Funktionsgleiche Teile oder Abschnitte der Ausführungsform nach Fig. 6 sind mit gleichen Bezugszeichen unter Hinzufügen des Buchstaben "a" versehen.

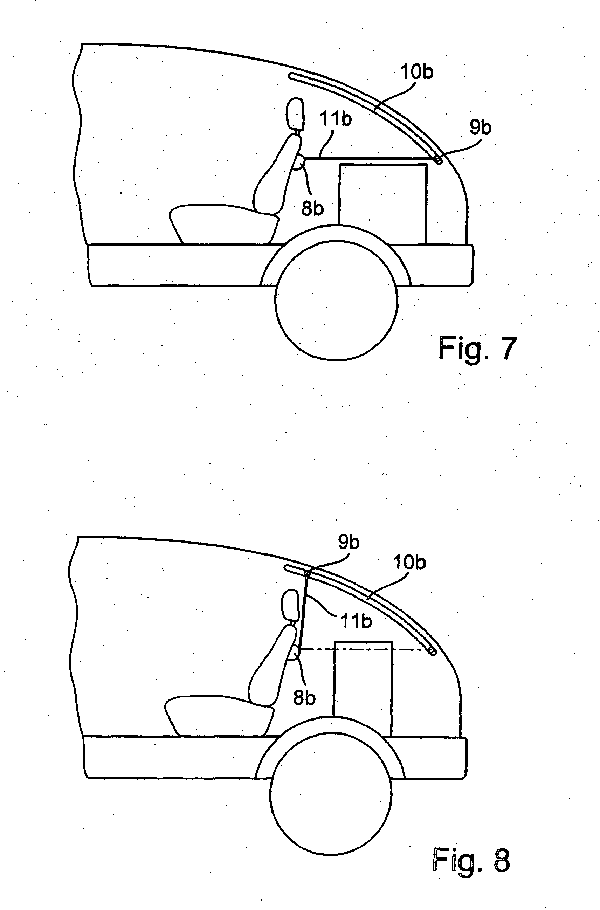

Die Ausführungsform nach den Fig. 7 und 8 entspricht in Aufbau und Funktion im wesentlichen der Ausführungsform nach den Fig. 1 bis 5. Einziger Unterschied ist es, dass die Schutzvorrichtung hier nicht bei einem Kombi-Personenkraftwagen, sondern vielmehr bei einem Personenkraftwagen mit Fliessheck vorgesehen ist. Die Führungsschienen 10b sind entsprechend dem wesentlich kleiner gestalteten Laderaum kürzer gestaltet und weisen eine gleichmäßige Krümmung in ihrem Verlauf zwischen der Fahrzeugbordkante und dem Dachrahmenbereich auf.

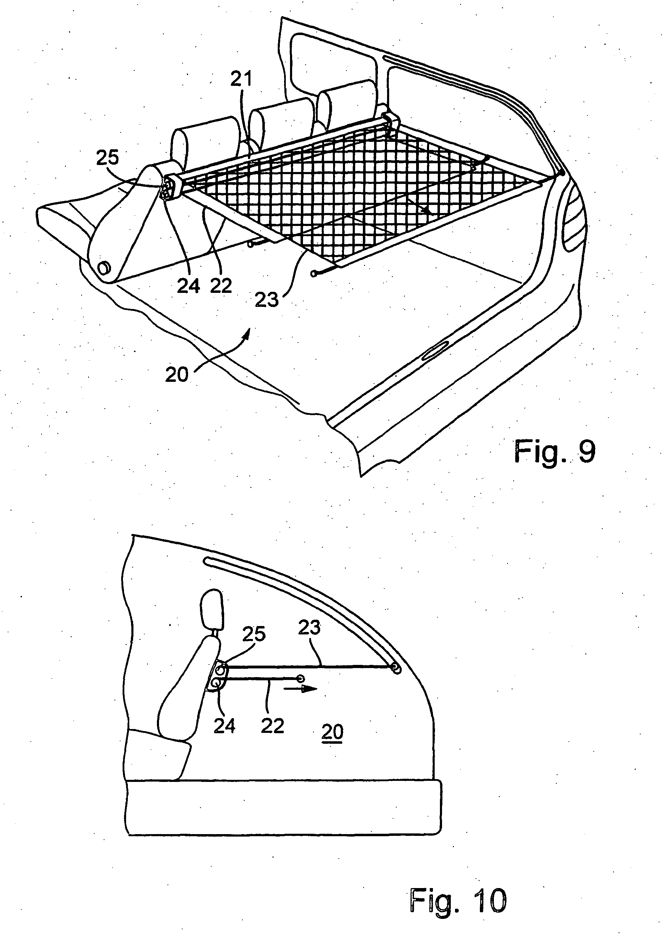

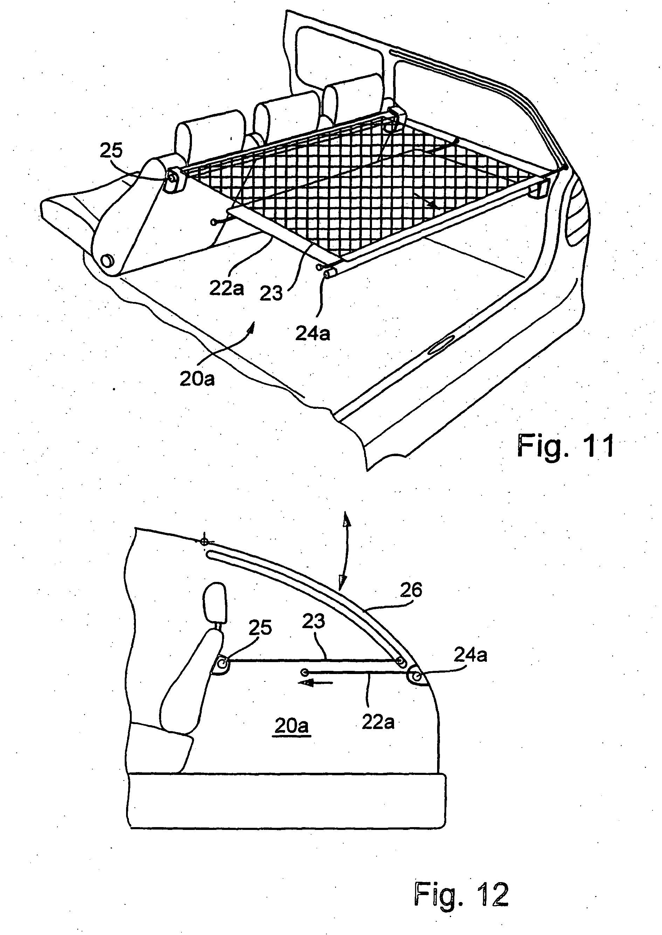

Beim Ausführungsbeispiel nach den Fig. 9 und 10 entspricht die Schutzvorrichtung 23, 25 in Aufbau und Funktion den Ausführungen gemäß den Fig. 1 bis 6, so dass zur näheren Erläuterung auf die Offenbarung zu diesen Fig. 1 bis 6 verwiesen wird. Wesentlicher Unterschied des Ausführungsbeispiels nach den Fig. 9 und 10 ist es, dass das erste Flächengebilde 23, das in eine etwa horizontale oder alternativ in eine etwa vertikale Schutzposition durch die Führungsmittel analog der Beschreibung zu den Fig. 1 bis 6 verlagerbar ist, ein weiteres Flächengebilde 22 ergänzt ist. Das Flächengebilde 22 ist parallel unterhalb des Flächengebildes 23 in eine etwa horizontale Schutzposition ausziehbar. Das flexible Flächengebilde 22 ist auf einer Wickelwelle auf-und abrollbar gelagert, die parallel zu einer Wickelwelle 25 des ersten Flächengebildes 23 unterhalb dieser Wikkelwelle 25 in dem Kassettengehäuse 21 gelagert ist. Das weitere Flächengebilde 22, das unterhalb des ersten Flächengebildes 23 positioniert ist, weist in einem Heckbereich des Laderaumes 20 Halteaufnahmen auf, in denen eine Auszugleiste des Flächengebildes 22 zeitweise fixierbar ist. Das Flächengebilde 22 ist blickdicht gestaltet, wo hingegen das erste Flächengebilde 23 als lichtdurchlässiges Trennnetz ausgeführt ist. Wenn das erste Flächengebilde 23 in seine vertikale Schutzposition überführt ist, kann das weitere Flächengebilde 22 als ergänzender Blickschutz für auf dem Laderaumboden befindliche Gegenstände ausgezogen werden. In gleicher Weise kann das weitere Flächengebilde 22 auch ausgezogen werden, wenn sich das erste Flächengebilde 23 in seiner etwa horizontalen Schutzposition befindet. Denn dadurch, dass das Flächengebilde 23 lediglich als lichtdurchlässiges Netzgebilde ausgeführt ist, ist in der horizontalen Schutzposition lediglich, eine Rückhaltefunktion für auf dem Laderaumboden befindliche Gegenstände, nicht jedoch eine Blickschutzfunktion gegeben. Durch das weitere Flächengebilde 22 wird der zusätzliche Blickschutz erzielt. Dadurch, dass das weitere Flächengebilde 22 in unmittelbarer Nähe zu dem ersten Flächengebilde 23 und parallel zu diesem ausziehbar und in ausgezogenem Zustand fixierbar ist, wird trotz doppeltem Einsatz von Flächengebilden kein nennenswert erhöhter Raum benötigt. Bei der Ausführungsform nach den Fig. 11 und 12 ist eine Ausgestaltung ähnlich den Fig. 9 und 10 vorgesehen. Zur näheren Erläuterung wird daher auf die Offenbarung zu den Fig. 9 und 10 und ergänzend auf die Offenbarung zu den Fig. 1 bis 6 verwiesen. Wesentlicher Unterschied bei der Ausführungsform nach den Fig. 11 und 12 ist es, dass hierdasblickdichte, weitere Flächengebilde 22a entgegengesetzt zur Ausziehrichtung des ersten Flächengebildes 23 ausziehbar angeordnet ist (Pfeilrichtung in Fig. 11 und 12). Dazu ist das weitere Flächengebilde 22a auf einer Wickelwelle 24a gehalten, die an einer Heckklappe 26 mittels entsprechender Halterungen oder mittels eines entsprechenden Gehäuses befestigt ist. Die Heckklappe ist in Richtung des Doppelpfeils in grundsätzlich bekannter Weise zu öffnen oder zu schließen. Im Bereich eines Kassettengehäuses, das die Wickelwelle 25 für das erste Flächengebilde 23 lagert, sind Einhängeelemente für die Auszugleiste des weiteren Flächengebildes 22a vorgesehen. Das Flächengebilde 22a ist analog dem Flächengebilde 22 blickdicht gestaltet, so dass sich die gleichen Vorteile wie bei einem Ausführungsbeispiel nach den Fig. 9 und 10 ergeben. Die Länge des weiteren Flächengebildes 22a ist vorzugsweise so groß gewählt, dass in ausgezogenem, d.h. eingehängtem Zustand des weiteren Flächengebildes 22a ein Öffnen der Heckklappe erfolgen kann. Das Flächengebilde 22a zieht sich dann soweit aus, dass es trotz eingehängtem Zustand die Öffnungsbewegung der Heckklappe 26 mitmachen kann. Der Wickelwelle 24a ist eine entsprechende Rückholfeder zugeordnet, die bei einem erneuten Schließen der Heckklappe automatisch wieder ein Aufwickeln und Spannen des Flächengebildes 22a bewirkt.

## Patentansprüche

1. Schutzvorrichtung für einen Innenraum eines Kraftfahrzeugs mit einem flexiblen Flächengebilde, das zwischen einer kompakt abgelegten Ruheposition und wenigstens einer ausgezogenen Schutzposition beweglich gelagert ist, **dadurch gekennzeichnet, dass** Führungsmittel (10, 10a, 10b)vorgesehen sind, die derart gestaltet sind, dass das Flächengebilde (11, 11b) zwischen einer ersten, etwa horizontal ausgezogenen Schutzposition, in der das Flächengebilde als Laderaumabdeckung fungiert, und einer zweiten, etwa vertikal ausgezogenen Schutzposition verlagerbar ist, in der das Flächengebilde als Rückhalteschutz für Laderaumgut bei einer starken Fahrzeugverzögerung ausgeführt ist, dass die Führungsmittel eine Linearführungsanordnung aufweisen, die auf gegenüberliegenden Fahrzeugseiten zueinander parallele, geradlinig und/oder gekrümmt verlaufende Führungsprofilierungen (10, 10a, 10b; 14) aufweist, dass ein in Auszugrichtung vorderer Stirnendbereich (9, 9a, 9b) des Flächengebildes (11, 11b) quer zur Auszugrichtung formstabil gestaltet ist und seitliche Lagerelemente (12, 13) aufweist, die mit den Führungsprofilierungen (10, 10a, 10b) in Verbindung stehen und dass die Lagerelemente (12, 13) und die Führungsprofilierungen (10, 10a, 10b) wenigstens in den Schutzpositionen des Flächengebildes (11, 11b) derart formschlüssig miteinander verbunden sind, dass durch eine starke Fahrzeugverzögerung verursachte Belastungen auf das Flächegebilde (11, 11 b) aufgenommen werden, ohne dass die Lagerelemente (12, 13) sich von den Führungsprofilierungen (10, 10a, 10b) trennen.

2. Schutzvorrichtung nach Anspruch 1, **dadurch gekennzeichnet, dass** den Führungsmitteln (10a) im Bereich wenigstens einer Schutzposition eine Trenneinrichtung (17, 18) zugeordnet ist, die ein gesteuertes Lösen des Stirnendbereiches (9a) von den Führungsmitteln (10a) ermöglicht.

3. Schutzvorrichtung nach Anspruch 2, **dadurch gekennzeichnet, dass** wenigstens eine Führungsprofilierung (10a) an wenigstens einem Endbereich (17, 18) derart offen gestaltet ist, dass der Stirnendbereich (9a) des Flächengebildes von der Führungsprofilierung (10a) lösbar ist.

4. Schutzvorrichtung nach wenigstens einem der vorhergehenden Ansprüche, **dadurch gekennzeichnet, dass** eine Antriebsvorrichtung (19) vorgesehen ist, die in wenigstens einer Richtung eine Verlagerung des Stirnendbereiches (9, 9a, 9b) längs der Führungsprofilierungen (10, 10a, 10b) erzielt.

5. Schutzvorrichtung nach Anspruch 4, **dadurch gekennzeichnet, dass** als Antriebsvorrichtung ein Linearstellantrieb vorgesehen ist, der auf den Stirnendbereich (9, 12) in beiden Richtungen der Längserstreckung der Führungsprofilierungen (10, 14) einwirkt.

6. Schutzvorrichtung nach Anspruch 4, **dadurch gekennzeichnet, dass** die Antriebsvorrichtung eine Synchronisiereinrichtung zum gleichmäßigen und gleichzeitigen Antreiben beider Seiten des Stirnendbereiches des Flächengebildes aufweist.

7. Schutzvorrichtung nach Anspruch 1, **dadurch gekennzeichnet, dass** das Flächengebilde (11) in der etwa vertikalen Schutzposition zumindest teilweise lichtdurchlässig gestaltet ist.

## Claims

1. Protective device for an interior of a motor vehicle with the flexible flat-shaped article movably mounted between a compactly stored rest position and at least one extended protective position, **characterized in that** guide means (10, 10a, 10b) are provided that are designed such that the flat-shaped article (11, 11 b) can be moved between a first and approximately horizontally extended protective position, in which the flat-shaped article acts as a luggage compartment cover, and a second and approximately vertically extended protective position, in which the flat-shaped article is designed as a restraining protection for luggage compartment contents in the event of a severe vehicle deceleration, **in that** the guide means have a linear guide arrangement that has on opposite sides of the vehicle guide profiles (10, 10a, 10b; 14) parallel to one another and with a straight and/or curved course, **in that** a front end area (9, 9a, 9b) of the flat-shaped article (11, 11b) at the front in the extension direction is designed form-stable transversely to the extension direction and has lateral fixing elements (12, 13) connected to the guide profiles (10, 10a, 10b) and **in that** the fixing elements (12, 13) and the guide profiles (10, 10a, 10b) are positively connected to another another at least in the protective positions of the flat-shaped article (11, 11 b) such that loads caused by a severe vehicle deceleration and acting on the flat-shaped article (11, 11b) are absorbed without the fixing elements (12, 13) being separated from the guide profiles (10, 10a, 10b).

2. Protective device according to Claim 1, **characterized in that** the guide means (10a) are assigned in the area of at least one protective position a separating device (17, 18) which permits a controlled detachment of the front end area (9a) from the guide means (10a).

3. Protective device according to Claim 2, **characterized in that** at least one guide profile (10a) is designed in at least one end area (17, 18) open such that the front end area (9a) of the flat-shaped article is detachable from the guide profile (10a).

4. Protective device according to at least one of the preceding claims, **characterized in that** a drive device (19) is provided that achieves in at least one direction a movement of the front end area (9, 9a, 9b) along the guide profiles (10, 10a, 10b).

5. Protective device according to Claim 4, **characterized in that** a linear actuator is provided as the drive device and acts on the front end area (9, 12) in both directions of the longitudinal extent of the guide profiles (10, 14).

6. Protective device according to Claim 4, **characterized in that** the drive device has a synchronizing device for uniform and simultaneous driving of both sides of the front end area of the flat-shaped article.

7. Protective device according to Claim 1, **characterized in that** the flat-shaped article (11) is designed at least partially translucent in the approximately vertical protective position.

## Revendications

1. Dispositif de protection pour un habitacle d'un véhicule avec une structure plane flexible qui est montée de manière à pouvoir être déplacée entre une position de repos rangée de manière compacte et au moins une position de protection déroulée, **caractérisé en ce que** sont prévus des moyens de guidage (10, 10a, 10b) conçus de telle sorte que la structure plane (11, 11b) peut être déplacée entre une première position de protection déroulée approximativement à l'horizontale, dans laquelle la structure plane sert de système de recouvrement du compartiment à bagages, et une deuxième position de protection déroulée approximativement à la verticale, dans laquelle la structure plane est conçue comme une protection de retenue pour compartiment à bagages en cas de forte décélération du véhicule, que les moyens de guidage présentent un dispositif de guidage linéaire doté de profilés de guidage (10, 10a, 10b ; 14) s'étendant en ligne droite et/ou incurvée et parallèlement l'un à l'autre sur les côtés opposés du véhicule, qu'une section d'extrémité frontale (9, 9a, 9b) de la structure plane (11, 11b) située à l'avant dans le sens de déroulement est de conception indéformable transversalement au sens de déroulement et présente des éléments d'appui latéraux (12, 13) qui sont reliés aux profilés de guidage (10, 10a, 10b), et que les éléments d'appui (12, 13) et les profilés de guidage (10, 10a, 10b) sont reliés mécaniquement entre eux au moins dans les positions de protection de la surface plane (11, 11b) de telle sorte que les charges exercées sur la surface plane (11, 11b) en raison d'une forte décélération du véhicule sont absorbées sans que les éléments d'appui (12, 13) ne se détachent des profilés de guidage (10, 10a, 10b).

2. Dispositif de protection selon la revendication 1, **caractérisé en ce qu'**un dispositif de séparation (17, 18) est associé aux moyens de guidage (10a) dans la zone d'au moins une position de protection, lequel dispositif permet un détachement contrôlé de la section d'extrémité frontale (9a) des moyens de guidage (10a).

3. Dispositif de protection selon la revendication 2, **caractérisé en ce qu'**au moins un profilé de guidage (10a) présente une conception ouverte sur au moins une section frontale (17, 18) de telle manière que la section d'extrémité frontale (9a) de la structure plane puisse être détachée du profilé de guidage (10a).

4. Dispositif de protection selon au moins l'une des revendications précédentes, **caractérisé en ce qu'**est prévu un dispositif d'entraînement (19) qui permet un déplacement de la section d'extrémité frontale (9, 9a, 9b) au moins dans une direction le long des profilés de guidage (10, 10a, 10b).

5. Dispositif de protection selon la revendication 4, **caractérisé en ce qu'**est prévu, en tant que dispositif d'entraînement, un mécanisme de commande linéaire qui agit sur la section d'extrémité frontale (9, 12) dans les deux directions de l'étendue longitudinale des profilés de guidage (10, 14).

6. Dispositif de protection selon la revendication 4, **caractérisé en ce que** le dispositif d'entraînement présente un dispositif de synchronisation pour un entraînement homogène et simultané des deux côtés de la section d'extrémité frontale de la structure plane.

7. Dispositif de protection selon la revendication 1, **caractérisé en ce que** la structure plane (11) est conçue de manière au moins partiellement transparente dans la position de protection approximativement verticale.
